Europäisches Patentamt

European Patent Office

Office européen des brevets

(19)

(11) Veröffentlichungsnummer: **0 303 103 B1**

## (12) EUROPÄISCHE PATENTSCHRIFT

(45) Veröffentlichungstag der Patentschrift: **23.12.92**

(21) Anmeldenummer: **88112093.5**

(22) Anmeldetag: **27.07.88**

(51) Int. Cl.⁵: **E06B 3/96**

(54) **Verfahren und Vorrichtung zur Bearbeitung der Eckverbindungen von Rahmen aus Kunststoffprofilen.**

(30) Priorität: **14.08.87 DE 3727136**

(43) Veröffentlichungstag der Anmeldung:
**15.02.89 Patentblatt 89/07**

(45) Bekanntmachung des Hinweises auf die
Patenterteilung:
**23.12.92 Patentblatt 92/52**

(84) Benannte Vertragsstaaten:
**AT BE CH DE ES FR GB GR IT LI LU NL SE**

(56) Entgegenhaltungen:
**DE-A- 3 329 756**

(73) Patentinhaber: **Urban GmbH & Co. Maschinenbau KG
Dornierstrasse 5
W-8940 Memmingen(DE)**

(72) Erfinder: **Tesch, Wolfgang
Keltenstrasse 18
W-8941 Heimertingen(DE)**
Erfinder: **Maurus, Leonhard
Blattergasse 9 1/3
W-8940 Memmingen(DE)**

(74) Vertreter: **Pfister, Helmut, Dipl.-Ing.
Buxacher Strasse 9
W-8940 Memmingen/Bayern(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft ein Verfahren zur Bearbeitung der Eckverbindungen von Rahmen aus auf Gehrung geschnittenen, verschweißten Kunststoffprofilen, zum Beispiel von Fensterrahmen, wobei die Rahmenprofile unterschiedliche Maße aufweisen und die Eckverbindungen durch paarweise zusammenwirkende, teils relativ stillstehende und teils bewegliche Spannmittel in der Rahmenebene und rechtwinklig hierzu eingespannt, die zu bearbeitenden Oberflächen abgetastet und durch Werkzeuge bearbeitet werden.

Die Erfindung betrifft weiter eine Vorrichtung zur Durchführung dieses Verfahrens.

Beim Bearbeiten der Eckverbindungen von Rahmen, beispielsweise von Außenrahmen oder Flügelrahmen für Fenster oder auch von Türen, geht es im wesentlichen um das Bearbeiten der Schweißraupe, wobei vorstehende Bereiche abgetragen werden und Nuten und ähnliche Konturen freigelegt werden sollen. Maschinen, die diese Bearbeitung vornehmen, sollen weitgehend automatisch arbeiten können. Die Schwierigkeit besteht jedoch darin, da die zu bearbeitenden Profile häufig wechseln. Außenrahmen bestehen aus anderen Profilen, als Flügelrahmen. Auch werden beispielsweise beim Außenrahmen im Bereich des Rolladens andere Profile benutzt, als an den Seiten oder an der Fensterbank.

Das Umstellen der Maschinen zur Beherrschung der verschiedenen Profile ist umständlich und zeitaufwendig. Häufig können Fehlbedienungen nicht ausgeschlossen werden.

In der DE-A-33 29 756 wird eine Vorrichtung zum Verputzen des Innenecks aus stumpf geschweißten Profilstäben vorgeschlagen, bei der ein Rahmen in einer Aufspanneinrichtung gehalten ist und wobei ein diagonal zum Rahmeneck verfahrbarer Horizontalschlitten und ein senkrecht dazu verfahrbarer Vertikalschlitten jeweils mindestens einen am Rahmeneck anlegbaren Anschlag aufweist. Es wird also derart vorgegangen, daß zunächst der Rahmen eingespannt wird und daß dann durch den verfahrbaren Anschlag das Bearbeitungswerkzeug in die Ausgangsposition gebracht wird. In bestimmten Fällen läßt sich hierdurch eine Bearbeitungsvereinfachung erreichen. Die Verbesserung ist jedoch unbefriedigend.

Es ist Aufgabe der Erfindung, ein Verfahren bzw. eine Vorrichtung vorzuschlagen, mit denen es möglich ist, das Bearbeiten von Eckverbindungen, insbesondere von solchen Eckverbindungen, die in Teilen ihrer Abmessungen gleich oder ähnlich sind, wesentlich zu vereinfachen.

Zur Lösung dieser Aufgabe geht die Erfindung aus von dem eingangs angegebenen Verfahren und schlägt vor, daß beim Einspannen des Rahmens in der Rahmenebene und/oder rechtwinklig hierzu durch das beim Spannvorgang bewegliche Spannmittel die Lage der Oberflächen bestimmt und durch mit dem beweglichen Spannmittel verbundene Positionierträger und Anschläge dementsprechend selbsttätig die Position der Werkzeuge eingestellt wird.

Es liegt auf der Hand, daß hierdurch eine wesentliche Beschleunigung erreicht wird, wobei die erfindungsgemäße Überlegung sowohl bei der Bearbeitung des Innen- als auch des Außeneckes Anwendung finden kann und auch bei der Bearbeitung der Flächen, die sich im wesentlichen in der Rahmenebene erstrecken.

Die Erfindung betrifft weiter eine Vorrichtung zur Durchführung dieses Verfahrens. Die Unteransprüche kennzeichnen vorteilhafte Weiterentwicklungen und Ausgestaltungen der Erfindung.

In der Zeichnung ist ein Ausführungsbeispiel der Erfindung schematisch dargestellt. Es zeigen:

Fig. 1 und Fig. 2
schematische Querschnittsdarstellungen von Profilformen, die gemäß der Erfindung bearbeitbar sind,

Fig. 3
einen senkrechten Schnitt durch eine erfindungsgemäße Vorrichtung,

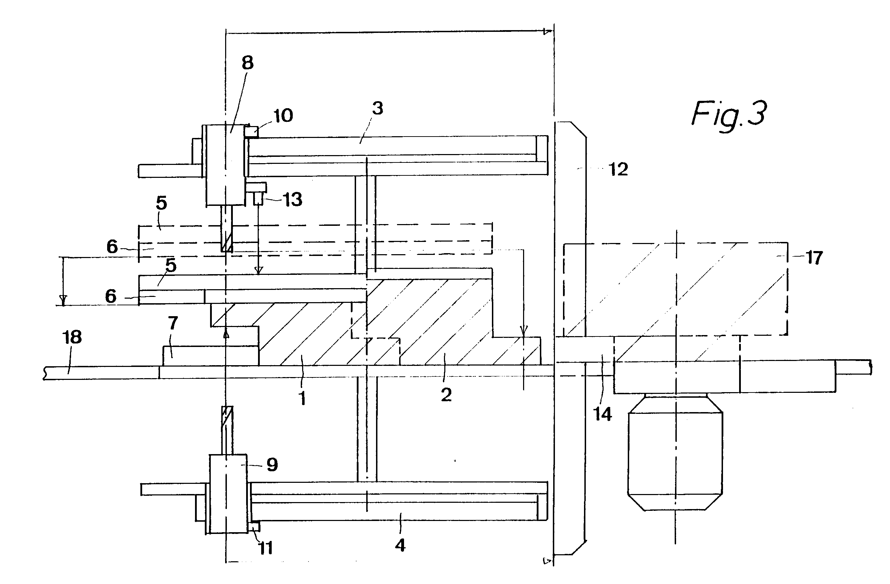

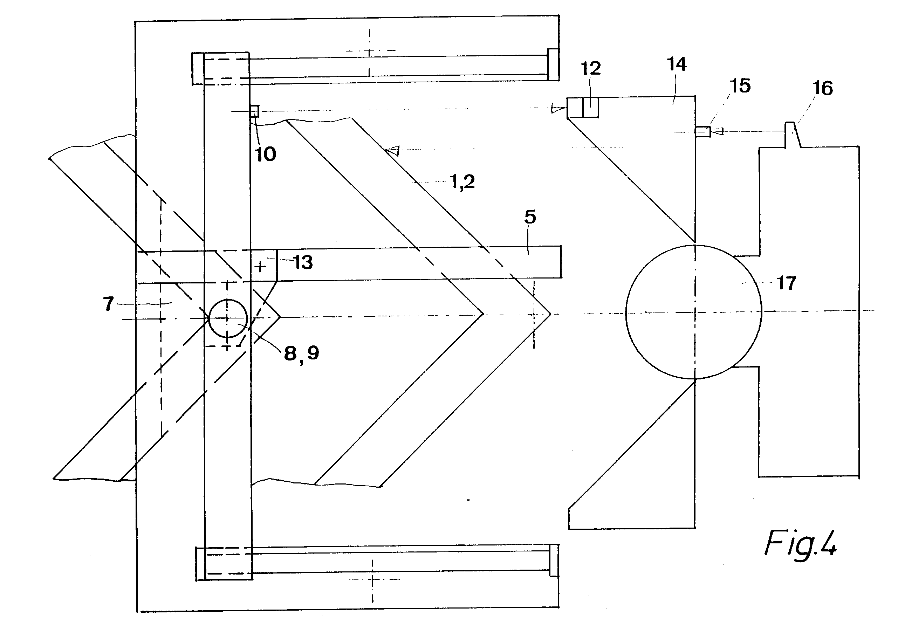

Fig. 4
eine Draufsicht auf die Vorrichtung nach der Fig. 3 und

Fig. 5
eine Ansicht einer Einzelheit der Erfindung.

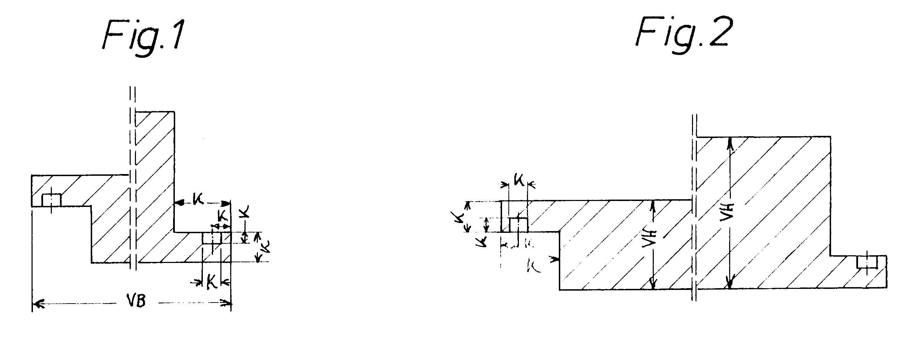

In der Fig. 1 und der Fig. 2 sind schematisch Profile dargestellt, das Maß VB gibt die Profilbreite an und das Maß VH die Profilhöhe. Die Profilbreite VB und die Profilhöhe VH können von Profil zu Profil variieren, ohne daß dies für die Positionierung der Werkzeuge eine Bedeutung hätte. Diese Unterschiede in den Abmessungen werden bei der Erfindung selbsttätig berücksichtigt. Die Maße, die mit "K" angedeutet sind, sind dagegen bei jedem Profil gleich und sind durch die vorgesehenen Werkzeuge zu berücksichtigen. Die Bearbeitungswerkzeuge besitzen dabei eine an sich bekannte Ausbildung. Es können Bohrwerkzeuge, Fräswerkzeuge, Stechwerkzeuge oder dergleichen sein, ohne daß dies für die Erfindung entscheidend wäre.

Die erfindungsgemäß Vorrichtung umfaßt im wesentlichen den Tisch 18, der geeignete Ausnehmungen besitzt, so daß die zu bearbeitenden Flächen zugänglich sind. Die Zentrierplatte 7 ist durch Einrichtungen, die nicht näher dargestellt sind, absenkbar, so daß das Einlegen des Rahmens in die Vorrichtung bzw. auf den Tisch von der Zentrierplatte nicht behindert wird. Der Rahmen kann also mit der zu bearbeitenden Eckverbindung in die Vorrichtung eingebracht werden. Ist der Rahmen eingeschoben, wird die Zentrierplatte 7 angehoben, so daß diese eine Anlage für die Innenflächen der Eckverbindungen bilden kann. Die Zentrierplatte besitzt Anlageflächen, die sinngemäß winklig zueinander ausgerichtet sind.

Nun spannen die Winkelspannplatten 14 mit dem Positionierträger 12 den Rahmen gegen die Zentrierplatte 7. Es sind zwei gleichartig ausgebildete Winkelspannplatten 14 vorgesehen, so daß eine sichere Verspannung in der Rahmenebene bzw. der Ebene des Tisches 18 erhalten wird. Nach dem Spannvorgang ist der Positionierträger 12 entsprechend der Profilbreite VB entsprechend positioniert. Nach diesem Vorgang bewegt sich die Höhenspannplatte 6 mit dem Bohranschlagträger 5 auf das eingelegte Profil und spannt dieses auf dem Tisch fest.

Der untere Werkzeugschlitten 4 ist fest mit der Höhenspannplatte 6 verbunden, so daß das untere Werkzeug 9 auf diese Weise automatisch auf die richtige Bearbeitungsposition gebracht wird.

Der Arbeitshub des Werkzeuges 9 ist konstant eingestellt.

Nach Beendigung dieses Arbeitstaktes fährt das obere Werkzeug 8 mit seinem Anschlag 10 gegen den Positionierträger 12. Das obere Werkzeug 8 bewegt sich anschließend mit seinem Anschlag 13 gegen den Bohranschlagträger 5, der mit der Höhenspannplatte 6 verbunden ist. Die Bearbeitungstiefe, bedingt durch die Profilhöhe VH, ist dadurch automatisch eingestellt, ohne daß es notwendig wird, die tatsächliche Bearbeitungsposition am Profil abzutasten.

Die Bearbeitungsposition des Außeneckfräsers 17 wird entsprechend der Profilbreite VB ebenfalls automatisch durch das Anfahren der Anschläge 15 und 16 erreicht. Die Winkelspannplatte, die an den Profilteilen 1 bzw. 2 des Rahmens anliegt, bestimmt somit den Hub des Außenfräsers 17.

Wenn vorstehend von Bohranschlägen usw. die Rede ist, so sind darunter in der Regel Anschläge für das bewegliche Werkzeug zu verstehen. Die Art der verwendeten Werkzeuge ist sinngemäß frei wählbar.

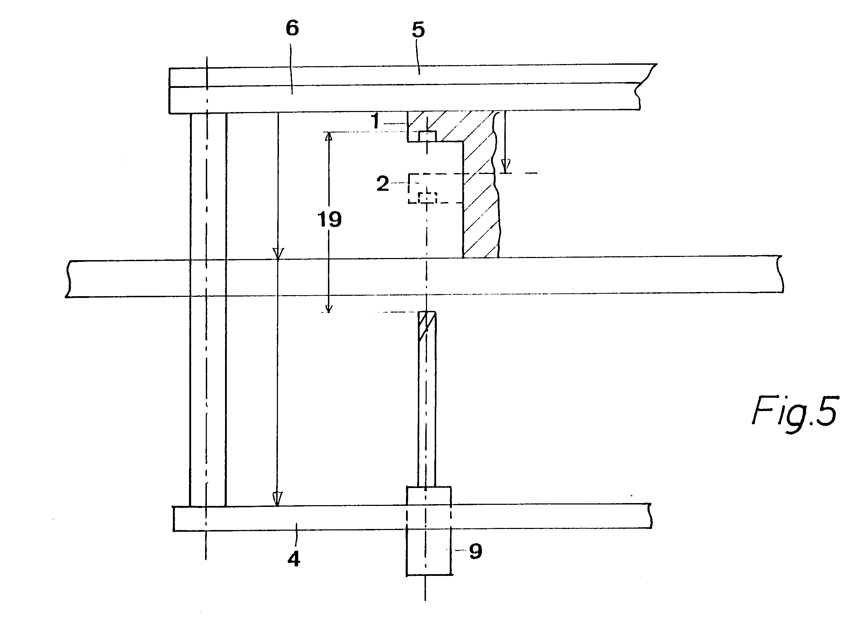

Die Fig. 5 zeigt das Zusammenwirken der Höhenspannplatte 6 mit dem unteren Werkzeugschlitten 4. Diese beiden Elemente sind miteinander verbunden. Durch den konstant eingestellten Werkzeughub 19 wird immer die richtige Bearbeitungstiefe erreicht, wobei die Bearbeitungstiefe des Werkzeugs 9 von der Lage der Höhenspannplatte 6 bzw. des Bohranschlagträgers 5 bestimmt ist.

**Patentansprüche**

1. Verfahren zur Bearbeitung der Eckverbindungen von Rahmen aus auf Gehrung geschnittenen, verschweißten Kunststoffprofilen (1,2), zum Beispiel von Fensterrahmen, wobei die Rahmenprofile unterschiedliche Maße aufweisen und die Eckverbindungen durch paarweise zusammenwirkende, teils relativ stillstehende und teils bewegliche Spannmittel (7,14;18,6) in der Rahmenebene und rechtwinklig hierzu eingespannt, die zu bearbeitenden Oberflächen abgetastet und durch Werkzeuge (8,9,17) bearbeitet werden, dadurch gekennzeichnet, daß beim Einspannen des Rahmens in der Rahmenebene und/oder rechtwinklig hierzu durch das beim Spannvorgang bewegliche Spannmittel (14,6) die Lage der Oberflächen bestimmt und durch mit dem beweglichen Spannmittel (14,6) verbundene Positionierträger (12) und Anschläge (5,15) dementsprechend selbsttätig die Position der Werkzeuge (8,9,17) eingestellt wird.

2. Verfahren nach Anspruch 1, dadurch gekennzeichnet, daß durch die zusammenwirkenden Spannmittel auch der Arbeitshub der Werkzeuge bestimmt wird.

3. Vorrichtung zur Durchführung des Verfahrens nach einem oder beiden der vorhergehenden Ansprüche, wobei für die Bearbeitung der Eckverbindungen von auf Gehrung geschnittenen, verschweißten Kunststoffprofilen, z. B. von Fensterrahmen, in der Rahmenebene und rechtwinklig hierzu paarweise zusammenwirkende, teils relativ stillstehende und teils bewegliche Spannmittel (7,14;18,6) vorgesehen sind, sowie mit relativ zu den Kunststoffprofilen beweglichen, in Arbeitsposition bringbaren Werkzeugen (8,9,17), dadurch gekennzeichnet, daß die beweglichen Spannmittel (14,6) Positionierträger (12) und Anschläge (5,15) tragen, die mit Gegenanschlägen (13,10,16) an den Werkzeugen (8,9,17) zusammenwirken und den Verschiebungsweg der Werkzeuge begrenzen.

4. Vorrichtung nach Anspruch 3, gekennzeichnet durch eine absenkbare und anhebbare Zentrierplatte (7) als Innenanschlag für die Eckverbindung.

5. Vorrichtung nach einem oder mehreren der vorhergehenden Ansprüche, gekennzeichnet durch mindestens eine Höhenspannplatte (6), die rechtwinklig zu einer Auflagefläche für den Rahmen, insbesondere dem Maschinentisch (18) beweglich ist.

6. Vorrichtung nach einem oder mehreren der vorhergehenden Ansprüche, dadurch gekennzeichnet, daß die Höhenspannplatte (6) mit einem Bohranschlagträger (5) für ein Bearbeitungswerkzeug (8) verbunden ist.

7. Vorrichtung nach einem oder mehreren der vorhergehenden Ansprüche, dadurch gekennzeichnet, daß die Höhenspannplatte (6) mit einem Werkzeugschlitten (4) verbunden ist, dessen Werkzeug (9) aus der Tischebene heraus wirksam ist.

8. Vorrichtung nach einem oder mehreren der vorhergehenden Ansprüche, dadurch gekennzeichnet, daß ein parallel zur Tischebene an einem Schlitten (3) verfahrbares Werkzeug (8) in Schlittenrichtung mit einem Positionieranschlag (12) an den Winkelspannplatten (14) zusammenwirkt.

9. Vorrichtung nach einem oder mehreren der vorhergehenden Ansprüche, dadurch gekennzeichnet, daß ein von oben auf den Rahmen einwirkendes Werkzeug (8) mit einem Bohranschlagträger (5) zusammenwirkt, der mit der Höhenspannplatte (6) verbunden ist.

**Claims**

1. Method for the treatment of corner joints of frames made of mitred, welded plastic profiles (1,2), as in the case of window frames, with the frame profiles having varying dimensions, the corner joints being clamped in the plane of the frame and arranged at right angles hereto by clamping elements (7,14;18,6) which act in pairs and are partly comparatively immobile and partly movable, the surfaces to be machined being traced and machined by tools (8,9,17), characterized in that when the frame is clamped in the plane of the frame and/or at right angles hereto the position of the surfaces is determined by the clamping elements (14,6) which are movable during the clamping operation and the position of the tools (8,9,17) is regulated correspondingly and automatically by positioning supports (12) and stop devices (5,15) connected to said movable clamping elements (14,6).

2. Method according to claim 1, characterized in that the working height of the tools is also determined by the clamping elements acting in combination.

3. Device for implementing the method according to one or both of the preceding claims whereby for the treatment of corner joints made of mitred, welded plastic profiles, as in the case of window frames, provision is made for clamping elements (7,14;18,6) acting in pairs in the plane of the frame and at right angles hereto being partly comparatively immobile and partly movable and tools (8,9,17) which are movable relative to the plastic profiles and can be brought into working position, characterized in that the movable clamping elements (14,6) bear positioning supports (12) amd stop devices (5,15) acting in combination with counter stop devices (13,10,16) on the tools (8,9,17) and limiting the linear shift of said tools.

4. Device according to claim 3, characterized by a centering plate (7) capable of being lowered and raised as an inner stop device for the corner joint.

5. Device according to one or more of the preceding claims, characterized by at least one height-adjustment clamping plate (6) movable at right angles to a supporting surface for the frame, in particular to the supporting table (18).

6. Device according to one or more of the preceding claims, characterized in that the height-adjustment clamping plate (6) is connected to a drilling stop support (5) for a machining tool (8).

7. Device according to one or more of the preceding claims, characterized in that the height-adjustment clamping plate (6) is connected to a tool slide (4), which tool (9) acts from within the table plane.

8. Device according to one or more of the preceding claims, characterized in that a tool (8) travelling on a slide (3) parallel to the table plane acts in the direction of the slide with a positioning stop device (12) provided on the angle clamping plates (14).

9. Device according to one or more of the preceding claims, characterized in that a tool (8) acting from above on the frame acts in combination with a drilling stop support (5) connected to the height-adjustment clamping plate (6).

**Revendications**

1. Procédé pour le façonnage des assemblages d'angle de cadres, ou châssis, formés de profilés (1, 2) en plastique coupés à onglet et soudés entre eux, par exemple des châssis de fenêtre, procédé dans lequel les profilés constitutifs du châssis présentent des cotes variées et les assemblages d'angle sont serrés dans le plan du châssis et perpendiculairement à celui-ci par des organes de serrage (7, 14 ; 18, 6) coopérant par paires et respectivement en partie relativement immobiles et pour une autre partie déplaçables, les surfaces à façonner sont explorées, et les surfaces à façonner sont explorées, puis façonnées par des outils (8, 9, 17), caractérisé en ce que lors du serrage du châssis dans le plan de châssis et/ou perpendiculairement à ce plan la position des surfaces est déterminée par l'organe de serrage (14, 6) déplaçable au cours du processus de serrage et la position des outils (8, 9, 17) est automatiquement réglée, en conséquence, par des supports de positionnement (12) et des butées (5, 15) reliés à l'organe de serrage déplaçable (14, 6).

2. Procédé selon la revendication 1, caractérisé en ce que la course de travail des outils est elle aussi déterminée par les organes de serrage coopérant entre eux.

3. Dispositif pour la mise en oeuvre du procédé selon la revendication 1 ou 2, et dans lequel sont prévus, pour le façonnage des assemblages d'angle de profilés en plastique coupés à onglet et soudés, par exemple de châssis de fenêtres, des organes de serrage (7, 14 ; 18, 6) respectivement en partie relativement immobiles et pour une autre partie déplaçables et qui coopèrent par paires dans le plan du châssis et perpendiculairement à celui-ci, ainsi que des outils (8, 9, 17) déplaçables par rapport aux profilés en plastique et pouvant être amenés dans leur position de travail, caractérisé en ce que les organes de serrage déplaçables (14, 6) portent des supports de positionnement (12) et des butées (5, 15) qui coopèrent avec des butées complémentaires (13, 10, 16) solidaires des outils (8, 9, 17) et limitent le trajet de coulissement des outils.

4. Dispositif selon la revendication 3, caractérisé par une plaque de centrage (7) susceptible d'être descendue et relevée et servant de butée intérieure pour l'assemblage d'angle.

5. Dispositif selon la revendication 3 ou 4, caractérisé par au moins une plaque de serrage en hauteur (6) qui est déplaçable perpendiculairement à une surface d'appui pour le châssis, en particulier à la table (18) de la machine.

6. Dispositif selon l'une quelconque des revendications 3 à 5, caractérisé en ce que la plaque de serrage en hauteur (6) est reliée à un support de butée de perçage (5) pour un outil de façonnage (8).

7. Dispositif selon l'une quelconque des revendications 3 à 6, caractérisé en ce que la plaque de serrage en hauteur (6) est reliée à un chariot porte-outil (4) dont l'outil (9) est actif de l'extérieur du plan de la table.

8. Dispositif selon l'une quelconque des revendications 3 à 7, caractérisé en ce qu'un outil (8) déplaçable parallèlement au plan de la table sur un chariot (3) coopère dans la direction du chariot avec une butée de positionnement (12) prévue sur les plaques de serrage angulaires (14).

9. Dispositif selon l'une quelconque des revendications 3 à 8, caractérisé en ce qu'un outil (8) agissant d'en haut sur le châssis coopère avec un support de butée de perçage (5) qui est relié à la plaque de serrage en hauteur (6).

*Fig.1*

*Fig.2*

*Fig.3*

EP 0 303 103 B1

Fig.4

Fig.5